# EUROPEAN PATENT SPECIFICATION

(11) **EP 1 652 952 B1**
(45) Date of publication and mention of the grant of the patent: **13.06.2007**
(21) Application number: 05256729.4
(22) Date of filing: 31.10.2005
(51) Int. Cl.: C23C 4/12, H05H 1/42, F01D 5/28, F01D 5/00, B23P 6/00

(54) **Methods for repairing workpieces using microplasma spray coating**
Verfahren zur Reparierung eines Werkstücks mittels Microplasmaspritzbeschichten.
Procédé de réparation d'une pièce par revêtement par microplasma

(30) Priority: 26.07.2005 US 190136; 19.10.2005 US 253868; 29.10.2004 US 976561; 29.10.2004 US 976560; 29.10.2004 US 976969
(43) Date of publication of application: 03.05.2006
(73) Proprietor: UNITED TECHNOLOGIES CORPORATION, Hartford, CT 06101 (US)
(72) Inventor: Zajchowski, Paul H., Enfield, CT 06082 (US); Blankenship, Donn R., Southbury, CT 06488 (US); Shubert, Gary, East Hampton, CT 06424 (US)
(74) Representative: Leckey, David Herbert

(56) References cited:
- EP-A- 0 808 913
- EP-A- 1 277 854
- US-A- 4 256 779
- US-A- 6 042 880
- US-A1- 2003 033 702
- US-A1- 2004 084 423

## Description

### FIELD OF THE DISCLOSURE

The present disclosure generally relates to a method for repairing a workpiece, and more particularly, a method for repairing a workpiece using a microplasma spray coating.

### BACKGROUND OF THE DISCLOSURE

Generally, conventional plasma spray coating apparatus are imprecise in applying their plasma spray coatings due to the size and width of the plasma stream. The plasma spray coating process typically requires the workpiece to be masked in areas where the material transfer is not desired and/or not required. Conventional plasma spray coating methods and apparatus require masking the workpiece and applying the coating due to the plasma spray coating pattern being too wide to accurately control the coating process. A conventional process which involves the use of masking is disclosed for example in the European patent application EP 0 808 913 A.

Consequently, there exists a need for a method for repairing a workpiece using a microplasma spray coating capable of being applied without the need for masking while still providing acceptable spray coating quality.

### SUMMARY OF THE INVENTION

In accordance with the present invention, a method for repairing a workpiece using microplasma broadly comprises the steps of generating a microplasma stream comprising a width of about 0.5 millimeters to about 5 millimeters; applying the microplasma stream to a workpiece; and coating a portion of the workpiece with the microplasma stream without masking the workpiece.

In accordance with the present invention, a method for repairing a knife edge seal of a workpiece using microplasma broadly comprises the steps of generating a microplasma stream comprising a width of about 0.5 millimeters to about 5 millimeters; applying the microplasma stream to a knife edge seal of a workpiece; and coating at least a portion of the knife edge seal with the microplasma stream without masking the workpiece.

In accordance with the present invention, a method for repairing a tip of a blade using microplasma broadly comprises the steps of generating a microplasma stream comprising a width of about 0.5 millimeters to about 5 millimeters; applying the microplasma stream to a tip of a blade; and coating at least a portion of the blade tip with the microplasma stream without masking the blade.

The details of one or more embodiments of the invention are set forth in the accompanying drawings and the description below. Other features, objects, and advantages of the invention will be apparent from the description and drawings, and from the claims.

### BRIEF DESCRIPTION OF THE DRAWINGS

FIG. 1 is an illustration representing a microplasma spray coating apparatus of the present invention;
FIG. 2 is an exploded, perspective view of the microplasma spray coating apparatus of FIG. 1;
FIG. 3 is an enlarged view of an electrode depicted in the microplasma spray coating apparatus of FIG. 2;
FIG. 4 is a flowchart representing a process for applying a microplasma spray coating to a workpiece in accordance with the present invention;
FIG. 5 is a workpiece having a continuous edge;
FIG. 5A is an exploded view of a continuous edge of the workpiece of FIG. 5 depicting the coating layers;
FIG. 6 is an assembled perspective view of the microplasma spray coating apparatus of FIG. 1 in operation;
FIG. 7 is another assembled perspective view of the microplasma spray coating apparatus of FIG. 1 in operation; and
FIG. 8 is an exploded view of area 8 in FIG. 7 of a blade tip depicting the coating layers.

Like reference numbers and designations in the various drawings indicate like elements.

### DETAILED DESCRIPTION

In performing the method(s) described herein, it is contemplated that a stationary microplasma spray coating apparatus, automated microplasma spray coating apparatus, remote controlled microplasma spray coating apparatus, robotic or robot implemented microplasma spray coating apparatus, and portable microplasma spray coating apparatus may be utilized. The stationary, automated, remote controlled and robotic implemented models are typically utilized within an enclosure such as a dedicated room where the noise level may be controlled and excess microplasma spray and/or powdered material may be collected with ease. It is also contemplated that a portable microplasma spray coating apparatus may be mounted on a mobile platform such as a vehicle, and transported to on-site locations to quickly facilitate repair work. Such a portable microplasma spray coating apparatus is described in United States Patent Application No. 11/190,135.

For purposes of illustration, and not to be taken in a limiting sense, the methods for repairing workpieces contemplated herein will be described with respect to using the aforementioned portable, hand-held microplasma spray coating apparatus. It is contemplated as will be recognized by one of ordinary skill in the art that the aforementioned portable, hand-held microplasma apparatus may be outfitted for use in the aforementioned stationary, automated, remote controlled and robotic implemented models. It is contemplated that the workpieces may comprise various gas turbine engine and turbomachinery components related, but not limited to, a fan, turbine, compressor, vane, blade, and the like, as well as other similar components in other industrial applications.

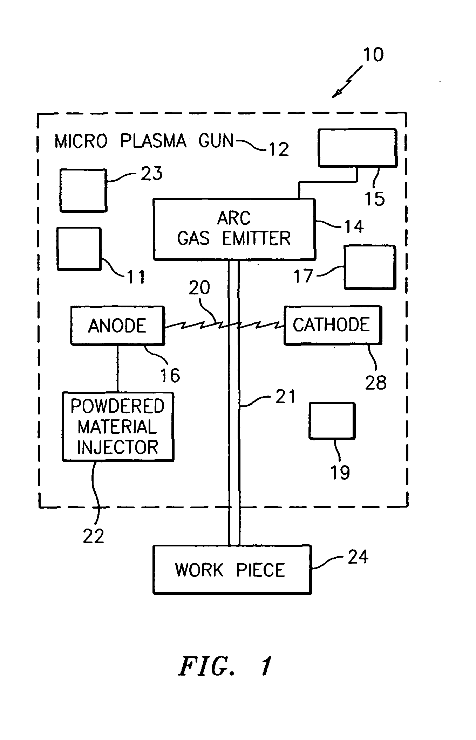

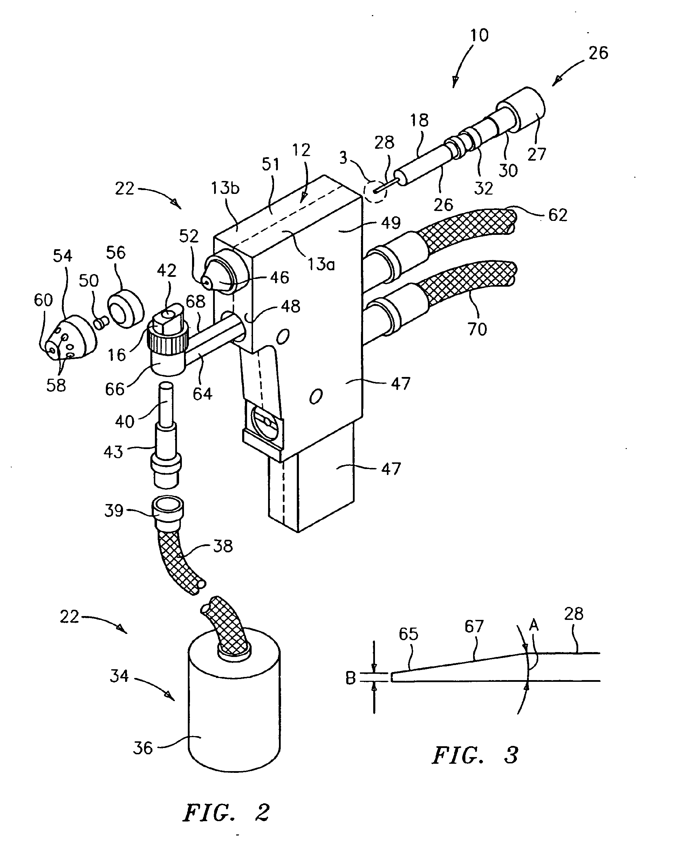

Referring now to FIGS. 1 and 2, a microplasma spray coating apparatus 10 schematically represented by the dashed box outline is depicted. Generally, microplasma spray coating apparatus 10 may comprise a microplasma gun 12 having a housing 13 containing an arc gas emitter 14, an anode 16, and a cathode 28. An electric arc 20 is generated between the anode 16 and cathode 28. A plasma stream 21 is formed when a quantity of arc gas is injected from the arc gas emitter 14 through the arc 20. A powdered material injector 22 dispenses a quantity of powdered material into the plasma stream which transports the powdered material to a workpiece 24. An arc gas source 15, a powder feeding system 23, a cooling fluid system 11 and a power source 17 are all connected to microplasma gun 12. The power source may operate in a power range necessary to perform the intended application of microplasma spray coating apparatus 10. Preferably, the power source operates at a relatively low power range of about 0.5 kilowatts to about 4 kilowatts. The power source may comprise any power source capable of providing the aforementioned desired power ranges, and includes a power cord to engage various sized power outlets. A filter system 19 for collecting excess microplasma spray and/or powder materials may be included in apparatus 10. Filter system 19 generally comprises a high efficiency particulate air filter having a hand held vacuum capable of removing excess powder from the air attached to a bag or container where the excess powder is collected. Filter system 19 is preferably mounted to the mobile platform along with apparatus 10.

Referring now to FIG. 2, the housing of microplasma gun 12 may comprise a grip portion 47, a forward wall 48, a first sidewall 49, a top wall 51, a backwall (not shown), and a second sidewall (not shown). The housing preferably comprises a first half 13a and a second half 13b; each half 13a, 13b includes a reciprocal male/female fastening mechanism such as, but not limited to, snaps, interlocking parts, depressed plunger and aperture, clips, clasps, combinations thereof, and the like, that are integrally formed therein. A nozzle shroud 46 positioned on a forward wall 48 of microplasma gun 12 may contain a nozzle insert 50 and a center aperture 52. The nozzle insert 50 may be threadingly attached to an end of nozzle shroud 46. A shield gas cap 54 may be positioned adjacent nozzle shroud 46. An insulator 56 may be positioned between a shield gas cap 54 and nozzle shroud 46 to electrically isolate shield gas cap 54 from nozzle shroud 46. Shield gas cap 54 may be pressed to fit over insulator 56 and onto nozzle shroud 46. Shield gas cap 54 includes a center aperture 60 to permit high velocity arc gas to pass through and into the electric arc. Shield gas cap 54 also includes a plurality of through apertures 58 for permitting shield gas to flow therethrough and shield the arc gas from ambient atmosphere. The shield gas flow rate may be about 2 to 4 liters per minute depending upon the intended application. The narrow spray pattern of microplasma stream 21 may also be controlled by the nozzle opening size.

Referring now to FIGS. 2 and 3, a cathode holder 26 includes a cathode 28 may be concentrically disposed in an insulating sleeve 18 and secured by an internal threaded mating juncture (not shown). Cathode holder 26 includes an insulating cap 27 for the holder's insertion and removal and a plurality of threads 30 for threadingly engaging insulating sleeve 18 and cathode 28 within microplasma gun 12. Insulating cap 27 and insulating sleeve 18 preferably comprise a nonconductive, insulating material such as phenolic materials, ceramic materials, polyetheretherketone materials, combinations thereof, and the like. When engaged, electrode 28 extends through center aperture 52 of nozzle shroud 46. Insulating sleeve 18 may also include an O ring seal 32 to seal the leak path that is created at the interface between insulating sleeve 18 and microplasma gun 12. Referring specifically now to FIG. 3, cathode 28 may comprise a body having a tip with a distal end. The tip may comprise a substantially flat upper surface formed at an angle of between approximately 8 degrees to 30 degrees, preferably approximately 8 degrees to 20 degrees, and more preferably approximately 8 degrees to 10 degrees. The distal end of the tip comprises a height of about 0.008 inches to 0.030 inches (0.2 to 0.76 mm), preferably about 0.008 inches to 0.020 inches (0.2 to 0.5 mm), and most preferably about 0.008 inches to 0.010 inches (0.2 to 0.25 mm) or, in the alternative, a height measuring approximately 10% to 20% of the diameter of cathode 28.

Referring again to FIG. 2, anode 16 comprises a metal or alloy having a melting point temperature higher than the intended operating temperature of the anode in microplasma gun 12. Preferably, anode 16 comprises a commercially available pure sintered tungsten or sintered tungsten blended with an oxide exhibiting refractory characteristics such as, but not limited to, thoria, lanthia, ceria, zirconia, and the like. These tungsten-oxide blended compositions may be cryogenically treated in order to enhance and stabilize their performance in the microplasma spray gun apparatus. Conventional anodes are typically formed from a copper-tungsten alloy and provide a very limited service life of approximately 10 to 20 minutes in microplasma spray coating apparatus 10. Copper and other similar metals have melting point temperatures that are lower than the anode operating temperature. As a result, these metals can melt and cause an upper edge of the anode to become molten and initiate cavitation and erosion. In order to produce high quality coatings, the edge of the anode must remain relatively sharp. To achieve this, a commercially pure sintered tungsten material has been developed to produce a more robust anode. Test results using anodes made from sintered tungsten material has shown marked improvements in the erosion resistance over prior art anodes. Utilizing commercially pure tungsten in anode 16 has increased the service life of anode 16 such that anode 16 may be utilized in operation for approximately 10 hours to 20 hours.

Electric arc 20 may be generated between anode 16 and cathode 28 of the microplasma gun 12. The arc gas may originate from an arc gas source 15 comprising a single gas or a mixture of gases, for example, a duplex gas, may originate from multiple gas sources interconnected with each other through a mixing apparatus and fed to the microplasma spray coating apparatus 10. The arc gas source 15 is connected to microplasma gun 12 via conduit having a length sufficient to permit slack so that the user of apparatus 10 may walk or climb, ascending or descending, with microplasma gun 12 a distance sufficient to perform the intended application without interrupting the flow of the arc gas to microplasma spray gun 12. Preferably, arc gas source 15 comprising a single gas is particularly advantageous over utilizing a duplex gas mixture or multiple gas sources and a mixing apparatus due to lower costs and fewer materials and parts. However, a pre mixed duplex gas mixture contained in a single arc gas source may also be utilized efficiently and cost effectively. The arc gas may comprise, but is not limited to, any inert gas, and preferably comprises argon, and a representative duplex gas mixture may comprise argon and hydrogen, and preferably, about 98% argon gas and about 2% hydrogen gas.

The arc gas may be admitted into the electric arc formed between anode 16 and cathode 28. One skilled in the art will recognize that in practice the arc gas can be emitted prior to generating the electric arc. Generally, the arc gas flow rate into microplasma spray coating apparatus 10 may be about 0.5 to 3 liters per minute. The electric arc ionizes the arc gas to create microplasma gas stream 21. The ionization process removes electrons from the arc gas, thus causing the arc gas to become temporarily unstable. The arc gas heats up to about 20,000°F to 30,000°F (11097°C to 16426°C) as it restabilizes. The microplasma gas stream then cools rapidly after passing through the electric arc.

A powdered material injector 22 injects an amount of powdered material 34 into plasma gas stream 21. Powdered material 34 is heated and super plasticized in the microplasma stream and is deposited on a workpiece where the deposited powdered material may cool and resolidify to form the microplasma spray coating. Powdered material injector 22 may comprise a powder hopper 36. Powder hopper 36 holds powder materials 34 prior to being injected into microplasma gas stream 21 by powder injector 22. Hopper 36 may be attached to microplasma gun 12 via a connector 38 formed on microplasma gun 12. Powdered material 34 may be channeled through a discharge chute 40 and controlled by a valve 42 positioned therein. The powdered material 34 may be injected into microplasma gas stream 21 either through gravity feed or through a pressurized system (not known). In the alternative, powder materials 34 may also be injected into microplasma stream 21 via a powder feeder hose from a standard powder feeder (not shown). Whether a gravity feed, a pressurized system or a standard powder feeder is employed, connector 38 or powered gas line (not shown) preferably has a length sufficient to permit slack so that the user of apparatus 10 may walk or climb a distance sufficient to perform the intended application. Microplasma spray gun may be oriented between a positive 45° angle and a negative 45° angle relative to a normal axis of the workpiece, while still providing adequate material coating with a gravity feed system. A pressure feed system provides unlimited angles and/or orientation for microplasma gun 12.

A shutoff control valve 42 also controls powder materials 34 feed rate into plasma gas stream 21. Powdered materials 34 may be transferred to the workpiece at a rate of about 1 to 30 grams per minute. Microplasma gun 12 may typically apply the microplasma spray coating from distances ranging from about 1.5 inches to 8 inches (38 to 203 mm) onto the workpiece, but may vary depending upon the coating application requirements.

Coolant fluid, such as water or the like, may be utilized to cool the microplasma gun 12. The cooling fluid may be delivered to the microplasma gun 12 via a cooling fluid hose 62. The cooling fluid traverses through internal passages (not shown) in the microplasma gun 12 and flows through an inlet passage 64, into an anode holder 66 and back through an outlet passage 68. The cooling fluid reduces the temperature of anode 16 during operation of the microplasma gun 12. The cooling flow rate may be approximately 0.1 to 1.0 gallons per minute. A second conduit 70 may be connected to the microplasma gun 12 in order to provide electrical power, arc gas, and chilled gas to the microplasma gun 12. Second conduit 70 preferably has a length sufficient to permit slack so that the user of apparatus 10 may walk or climb a distance with microplasma gun 12 sufficient to perform the intended application.

Microplasma gun 12 may be operated at a relatively low power range of about 0.5 kilowatts to about 4 kilowatts. The lower power output of the microplasma gun 12 and microplasma spray coating apparatus 10 significantly reduces the heat flow into the knife edge over that of conventional plasma coating methods. Depending upon the size of the workpiece, maximum surface temperature of the knife edge achieved by the application of the microplasma spray coating process described herein may be about 200°F (93°C). As a result, microplasma spray coating apparatus 10 is capable of applying a microplasma spray coating to a thin wall area of the knife edge, without distortion resulting due to localized stress caused by high thermal gradients.

Due to the low power output of microplasma spray coating apparatus 10 and the narrow aperture of microplasma gun 12, microplasma spray gun 12 may apply powdered coating material in a localized area on a workpiece at a size of approximately 1/10^{th} to approximately 1/20^{th}, and preferably 1/15^{th}, that of conventional plasma stream coating methods and apparatus. The size and diameter of the microplasma stream of microplasma spray coating apparatus 10 permits accurate surface coating even with a hand held device as contemplated herein. For example, the microplasma stream generated by microplasma spray coating apparatus 10 may comprise a width of about 0.5 millimeters to about 5 millimeters. Due to the size of the microplasma spray coating stream of the microplasma spray coating apparatus, the stream may be applied in narrow strips or in isolated spots on the workpiece which substantially eliminates the need for masking or otherwise covering the workpiece in areas where the coating is not desired.

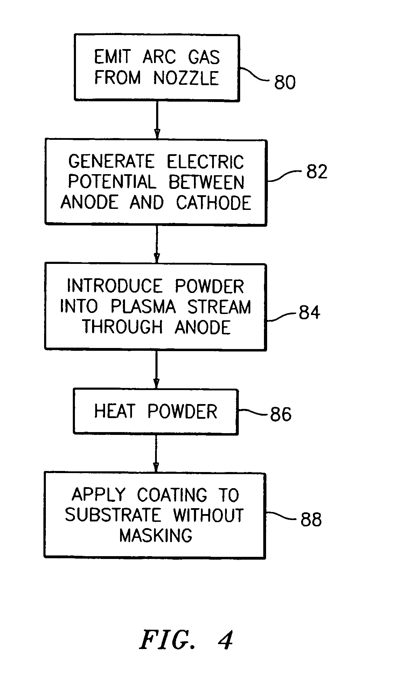

Referring now to FIG. 4, a block diagram generally illustrating the operation of microplasma spray coating apparatus 10 is illustrated. Initially, at block 80, arc gas is emitted from nozzle insert 50. An electric potential is generated between anode 16 and cathode 28 of the microplasma spray gun 12 and is directed through the arc gas, as described in block 82. Arc gas may be directed through the electric potential to create plasma stream 21. At block 84, powder materials 34 is injected into plasma stream 21. At block 86, the microplasma stream heats the powder materials 34 to a "super plasticized" condition such that the powder materials 34 is malleable when it is applied to the workpiece. "Superplasticized" refers to powdered material existing in both a molten state, e.g., molten droplets, that freeze upon impact with the substrate and an entrained solid particulate state that melts upon impact with the substrate surface. At block 88, powder materials 34 are applied to an unmasked workpiece. Powder materials 34 then cool and solidifies as a hard coating on the workpiece. Generally, the thickness of the microplasma spray coating may be dependent upon the intended application such as coating an OEM part or applying the coating for repair purposes.

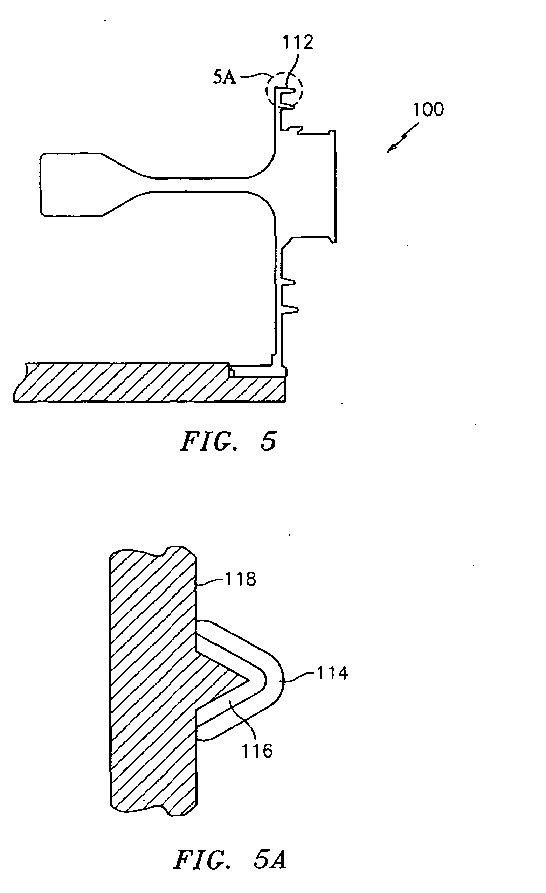

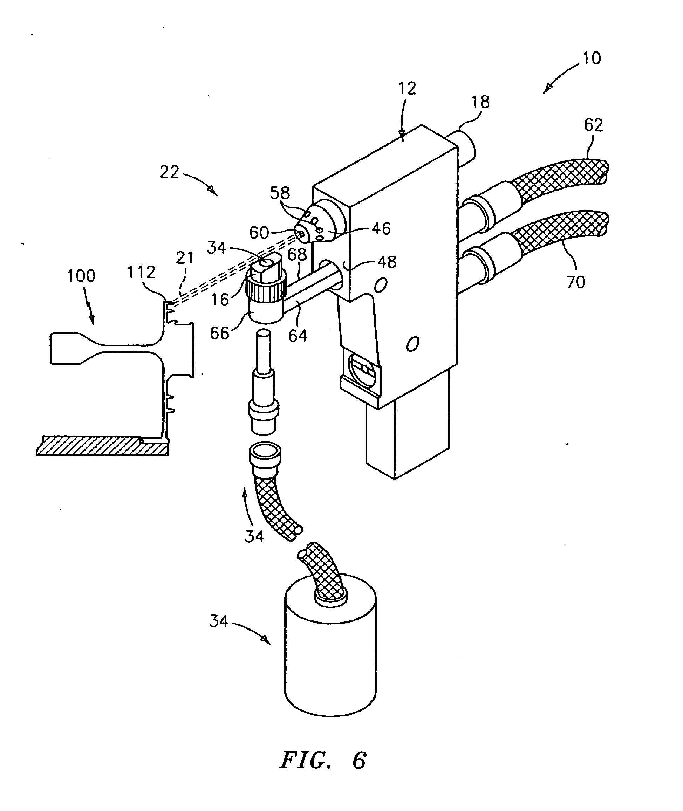

Referring generally now to FIGS. 5-7, various workpieces may be coated using repair methods described herein. Again, it is contemplated that the workpieces may comprise various gas turbine engine and turbomachinery components related, but not limited to, a fan, turbine, compressor, vane, blade, and the like, as well as other similar components in other industrial applications. Referring now to FIGS. 5, 5A and 6, a workpiece 100 may be spray coated and repaired with powder materials 34 utilizing the microplasma spray coating methods described herein. For purposes of illustration and not to be taken in a limiting sense, workpiece 100 may include a knife edge seal 112 having a ceramic based exterior layer, that is, the top coat layer 114, and a metallic based intermediate coating, that is, the bond coat layer 116, disposed between the top coat layer 114 and a surface 118 of knife edge seal 112.

Generally, powdered materials 34 may comprise any ceramic materials and metallic materials suitable for use at temperatures no more than about 1,800° F (982°C) at the knife edge seal. For knife edge seal repairs, powdered materials 34 may comprise a combination of a bond coat material comprising a metal alloy such as nickel alloys, e.g., nickel-aluminum (95%/5%), or an "M"CrAlY compound where "M" includes but is not limited to nickel, cobalt, nickel-cobalt alloys and combinations thereof, and a top coat material comprising a ceramic material such as a ceramic oxide including but not limited to aluminum oxide combined with titanium dioxide. Powdered materials 34 may also include other materials for the intended knife edge seal repair applications as is understood and recognized by one of ordinary skill in the art. During operation of microplasma spray coating apparatus 10, the powdered metallic and ceramic materials will become entrained in microplasma stream 21 and applied as a bond coat and a top coat, respectively. In certain knife edge seal repair applications, only a single layer of coating may be necessary or required. A single layer of coating may comprise any suitable coating material may also be applied by the microplasma coating stream to a knife edge seal. Suitable coating materials include, but are not limited to, nickel-chrome alloys, chrome carbides and combinations thereof.

The microplasma spray coating apparatus generates and directs a microplasma gas stream 21 toward the portion to be coated, e.g., knife edge seal 112, without masking the workpiece. One of the aforementioned metallic bond coat materials may be entrained in microplasma gas stream 21. A bond coat layer having a thickness of about 0.002 inches to 0.008 inches (0.05 to 0.2 mm) may be applied depending upon whether the microplasma coating is being applied to repair a knife edge seal or being applied as a coating on the tip of an OEM part. Once bond coat layer 116 is applied, the bond coat powdered material may be replaced in hopper 36 with one of the aforementioned ceramic top coat materials. The second powdered material may then be entrained in the microplasma gas stream 21 and deposited upon knife edge 112 without masking the workpiece. The resultant top coat layer 114 may have a thickness of about 0.003 inches to 0.015 inches (0.08 to 0.38 mm) depending upon whether the microplasma coating is being applied to repair a knife edge seal or being applied as a coating on the tip of an OEM part.

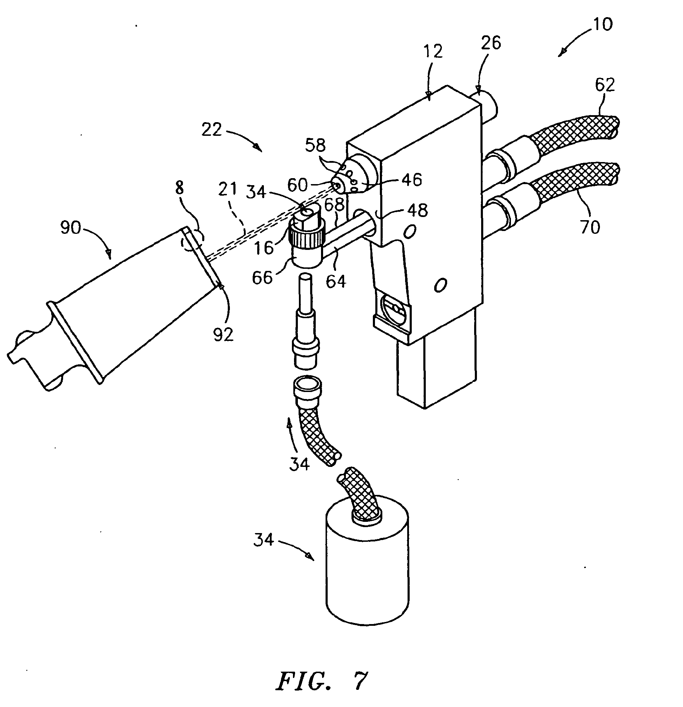

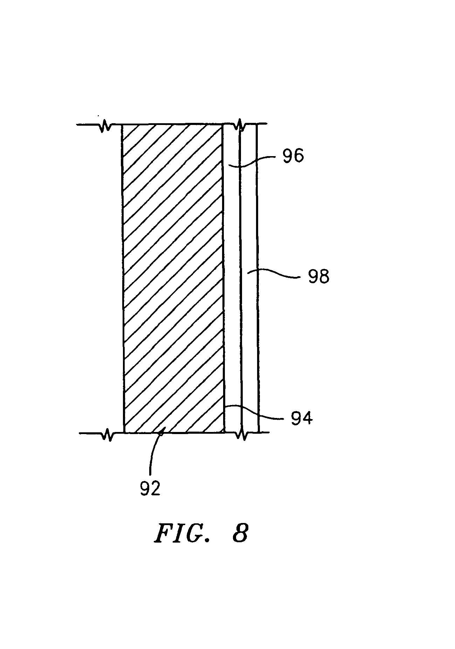

Referring now to FIGS. 7 and 8, in another method for repairing workpieces using the microplasma spray methods described herein, the workpiece may comprise a blade 90 and the portion to be repaired may be a tip 92 comprising a surface 94, an intermediate metallic bond coat layer 96 and an exterior ceramic top coat layer 98. For purposes of illustration, and not to be taken in a limiting sense, a compressor blade may be employed in discussing the microplasma spray coating method(s) described herein. It is contemplated that the microplasma spray coating method(s) described herein may be employed to coat and/or repair any type of blade tips known in the art.

For repairing blade tips, powdered materials 34 may comprise a combination of metallic materials and ceramic materials suitable for use at temperatures of no more than about 1800°F (982°C). Powdered materials 34 may comprise a combination of a bond coat material comprising a metal alloy including but not limited to nickel alloys, e.g., nickel-aluminum (95%/5%), or an "M"CrAlY compound where "M" includes but is not limited to nickel, cobalt, nickel-cobalt alloys and combinations thereof, in combination with small amounts of silicon and hafnium; and, a top coat material comprising a ceramic material such as a ceramic oxide including but not limited to yittria stabilized zirconia and the combination of aluminum oxide and titanium dioxide, and the like. Powdered material 34 may also include other materials specific to the intended blade tip repair application. During operation of microplasma spray coating apparatus 10, the powdered metallic materials and ceramic materials will become entrained in microplasma stream 21 and applied as a bond coat and a top coat, respectively.

The microplasma spray coating apparatus generates a microplasma gas stream 21 and directs stream 21 toward the portion to be coated, e.g., blade tip 92, without masking blade 90. One of the aforementioned metallic bond coat materials may be entrained in microplasma gas stream 21. A bond coat layer having a thickness of about 0.001 inches to 0.005 inches (0.025 to 0.127 mm) may be applied depending upon whether the microplasma coating is being applied as a coating on the tip of an OEM part or to repair a blade tip. Once the bond coat layer is applied, the bond coat powdered material may be replaced in hopper 36 with one of the aforementioned ceramic top coat materials. The ceramic top coat material may then be entrained in the microplasma gas stream 21 and deposited upon blade tip 92 without masking blade 90. The resultant top coat layer may have a thickness of about 0.004 inches to 0.025 inches (0.1 to 0.635 mm) depending upon whether the microplasma coating is being applied as a coating on the tip of an OEM part or to repair the a blade tip.

One or more embodiments of the present invention have been described. Nevertheless, it will be understood that various modifications may be made without departing from the scope of the invention. Accordingly, other embodiments are within the scope of the following claims.

## Claims

1. A method for repairing a workpiece using microplasma, comprising the steps of:
generating a microplasma stream (21) comprising a width of about 0.5 millimeters to about 5 millimeters;
applying said microplasma stream to a workpiece (100); and
coating a portion of said workpiece (100) with said microplasma stream without masking said workpiece.

2. The method of claim 1, wherein generating said microplasma spray coating stream comprises the steps of:
passing an inert arc gas into an electric arc (20) generated by an anode (16) and a cathode (28) of a microplasma spray coating apparatus to generate said microplasma stream (21); and
feeding a quantity of powdered material (34) into said microplasma stream (21), wherein said powdered material (34) is a metallic material selected from the group consisting of a nickel-chrome alloy, chrome carbide and combinations thereof.

3. The method of claim 2, wherein said workpiece (100) comprises a knife edge seal (112).

4. The method of claim 1 or 2, wherein coating said portion of said workpiece comprises:
feeding a quantity of a first powdered material (34) to form a bond coat layer; and
feeding a quantity of a second powdered material (34) to form a top coat layer.

5. The method of claim 4, wherein said first powdered material (34) comprises a metallic material and said second powdered material (34) comprises a ceramic material.

6. The method of claim 5, wherein said ceramic material comprises a mixture of aluminum oxide and titanium dioxide.

7. The method of claim 5, wherein said metallic material is selected from the group consisting of nickel, aluminum and combinations thereof.

8. The method of claim 5, wherein said metallic material comprises a formula of "M"CrAlY where "M" is selected from the group consisting of nickel, cobalt and combinations thereof.

9. The method of claim 5, wherein said ceramic material is yttria stabilized zirconia or a mixture of aluminum oxide and titanium dioxide.

10. The method of claim 5, wherein said metallic material comprises a formula of "M"CrAlY and a mixture of hafnium and silicon, where "M" is selected from the group consisting of nickel, cobalt and combinations thereof.

11. A method for repairing a knife edge seal (112) of a workpiece (100) using microplasma, comprising the steps of:
generating a microplasma stream (21) comprising a width of about 0.5 millimeters to about 5 millimeters;
applying said microplasma stream (21) to a knife edge seal (112) of a workpiece (100); and
coating at least a portion of said knife edge seal (112) with said microplasma stream (21) without masking said workpiece.

12. The method of claim 11, wherein generating said microplasma spray coating stream comprises the steps of:
passing an inert arc gas into an electric arc (20) generated by an anode (16) and a cathode (28) of a microplasma spray coating apparatus to generate said microplasma stream (21); and
feeding a quantity of powdered material (34) into said microplasma stream (21), wherein said powdered material (34) is a metallic material selected from the group consisting of a nickel-chrome alloy, chrome carbide and combinations thereof.

13. The method of claim 11, wherein coating at least said portion of said knife edge seal (112) comprises:
feeding a quantity of a first powdered material (34) to form a bond coat layer; and
feeding a quantity of a second powdered material (34) to form a top coat layer.

14. The method of claim 13, wherein said bond coat layer comprises a thickness of about 0.002 inches to 0.008 inches (0.05 to 0.2 mm) and said top coat layer comprises a thickness of about 0.003 inches to 0.015 inches (0.08 to 0.38 mm).

15. The method of claim 13 or 14, wherein said bond coat layer comprises a metallic material and said top coat layer comprises a ceramic material.

16. The method of claim 15, wherein said ceramic material comprises a mixture of aluminum oxide and titanium dioxide.

17. The method of claim 15, wherein said metallic material is selected from the group consisting of nickel, aluminum and combinations thereof.

18. The method of claim 15, wherein said metallic material comprises a formula of "M"CrAlY alloy where "M" is selected from the group consisting of nickel, cobalt and combinations thereof.

19. A method for repairing a tip (92) of a blade (90) using microplasma, comprising the steps of:
generating.a microplasma stream (21) comprising a width of about 0.5 millimeters to about 5 millimeters;
applying said microplasma stream (21) to an area comprising a tip (92) of a blade (90); and
coating at least a portion of said blade tip with said microplasma stream without masking said blade.

20. The method of claim 19, wherein coating at least said portion of said blade tip (92) comprises:
feeding a quantity of a first powdered material (34) to form a bond coat layer; and
feeding a quantity of a second powdered material (34) to form a top coat layer.

21. The method of claim 20, wherein said bond coat layer comprises a thickness of about 0.001 inches to 0.005 inches (0.025 to 0.127 mm) and said top coat layer comprises a thickness of about 0.004 inches to 0.025 inches (0.1 to 0.635 mm).

22. The method of claim 20, wherein said bond coat layer comprises a metallic material and said top coat layer comprises a ceramic material.

23. The method of claim 22, wherein said ceramic material comprises yttria stabilized zirconia or a mixture of aluminum oxide and titanium dioxide.

24. The method of claim 22, wherein said metallic material is selected from the group consisting of nickel, aluminum and combinations thereof.

25. The method of claim 22, wherein said metallic material comprises a formula of "M"CrAlY and a mixture of hafnium and silicon, where "M" is selected from the group consisting of nickel, cobalt and combinations thereof.

## Patentansprüche

1. Verfahren zum Ausbessern eines Werkstücks unter Verwendung von Mikroplasma, folgende Schritte aufweisend:
Erzeugen eines Mikroplasmastroms (21), der eine Breite von etwa 0,5 mm bis etwa 5 mm aufweist.
Aufbringen des Mikroplasmastroms auf ein Werkstück (100); und
Beschichten eines Bereichs des Werkstücks (100) mit dem Mikroplasmastrom ohne Maskieren des Werkstücks.

2. Verfahren nach Anspruch 1, bei dem das Erzeugen des Mikroplasma-Spritzbeschichtungsstroms die Schritte aufweist:
Führen eines inerten Bogengases in einen Lichtbogen (20), der von einer Anode (16) und einer Kathode (28) einer Mikroplasma-Spritzbeschjchtungsvorrichtung erzeugt wurde, um den Mikroplasmastrom (21) zu erzeugen; und
Einspeisen einer Menge an pulverförmigem Material (34) in den Mikroplasmastrom (21), wobei das pulverförmige Material (34) ein metallisches Material ist, das ausgewählt wird aus der Gruppe, die aus einer Nickel-Chrom-Legierung, Chromcarbid und Kombinationen davon besteht.

3. Verfahren nach Anspruch 2, bei dem das Werkstück (100) eine Schneidendichtung (112) aufweist.

4. Verfahren nach Anspruch 1 oder 2, bei dem das Beschichten des Bereichs des Werkstücks aufweist:
Einspeisen einer Menge eines ersten pulverförmigen Materials (34), um eine Bindungsauftragsschicht zu bilden; und
Einspeisen einer Menge eines zweiten pulverförmigen Materials (34), um eine Deckauftragsschicht zu bilden.

5. Verfahren nach Anspruch 4, bei dem das erste pulverförmige Material (34) ein metallisches Material aufweist und das zweite pulverförmige Material (34) ein keramisches Material aufweist.

6. Verfahren nach Anspruch 5, bei dem das keramische Material ein Gemisch aus Aluminiumoxid und Titandioxid aufweist.

7. Verfahren nach Anspruch 5, bei dem das metallische Material ausgewählt wird aus der Gruppe, die aus Nickel, Aluminium und Kombinationen davon besteht.

8. Verfahren nach Anspruch 5, bei dem das metallische Material eine Formel "M"CrAIY aufweist, worin "M" ausgewählt wird aus der Gruppe, die aus Nickel, Cobalt und Kombinationen davon besteht.

9. Verfahren nach Anspruch 5, bei dem das keramische Material mit Yttriumoxid stabilisiertes Zirconiumdioxid oder ein Gemisch aus Aluminiumoxid und Titandioxid ist.

10. Verfahren nach Anspruch 5, bei dem das metallische Material eine Formel "M"CrAIY und ein Gemisch aus Hafnium und Silicium aufweist, wobei "M" ausgewählt wird aus der Gruppe, die aus Nickel, Cobalt und Kombinationen davon besteht.

11. Verfahren zum Ausbessern einer Schneidendichtung (112) eines Werkstücks (100) unter Verwendung von Mikroplasma, folgende Schritte aufweisend:
Erzeugen eines Mikroplasmastroms (21), der eine Breite von etwa 0,5 mm bis etwa 5 mm aufweist;
Aufbringen des Mikroplasmastroms (21) auf eine Schneidendichtung (112) eines Werkstücks (100); und
Beschichten mindestens eines Teils der Schneidendichtung (112) mit dem Mikroplasmastrom (21) ohne Maskieren des Werkstücks.

12. Verfahren nach Anspruch 11, bei dem das Erzeugen des Mikroplasma-Spritzbeschichtungsstroms folgende Schritte aufweist:
Führen eines inerten Bogengases in einen Lichtbogen (20), der von einer Anode (16) und einer Kathode (28) einer Mikroplasma-Spritzbeschichtungsvorrichtung erzeugt wurde, um den Mikroplasmastrom (21) zu erzeugen; und
Einspeisen einer Menge an pulverförmigem Material (34) in den Mikroplasmastrom (21), wobei das pulverförmige Material (34) ein metallisches Material ist, das ausgewählt wird aus der Gruppe, die aus einer Nickel-Chrom-Legierung, Chromcarbid und Kombinationen davon besteht.

13. Verfahren nach Anspruch 11, bei dem das Beschichten mindestens des Bereichs der Schneidendichtung (112) aufweist:
Einspeisen einer Menge eines ersten pulverförmigen Materials (34), um eine Bindungsauftragsschicht zu bilden; und
Einspeisen einer Menge eines zweiten pulverförmigen Materials (34), um eine Deckauftragsschicht zu bilden.

14. Verfahren nach Anspruch 13, bei dem die Bindungsauftragsschicht eine Dicke von etwa 0,002 inch bis 0,008 inch (0,05 bis 0,2 mm) aufweist und die Deckauftragsschicht eine Dicke von etwa 0,003 inch bis 0,015 inch (0,08 bis 0,38 mm) aufweist.

15. Verfahren nach Anspruch 13 oder 14, bei dem die Bindungsauftragsschicht ein metallisches Material aufweist und die Deckauftragsschicht ein keramisches Material aufweist.

16. Verfahren nach Anspruch 15, bei dem das keramische Material ein Gemisch aus Aluminiumoxid und Titandioxid aufweist.

17. Verfahren nach Anspruch 15, bei dem das metallische Material ausgewählt wird aus der Gruppe, die aus Nickel, Aluminium und Kombinationen davon besteht.

18. Verfahren nach Anspruch 15, bei dem das metallische Material eine Formel einer "M"CrAIY-Legierung aufweist, wobei "M" ausgewählt wird aus der Gruppe, die aus Nickel, Cobalt und Kombinationen davon besteht.

19. Verfahren zum Ausbessern eines Endes (92) einer Laufschaufel (90) unter Verwendung von Mikroplasma, folgende Schritte aufweisend:
Erzeugen eines Mikroplasmastroms (21), der eine Breite von etwa 0.5 mm bis etwa 5 mm aufweist;
Aufbringen des Mikroplasmastroms (21) auf einen Bereich, der ein Ende (92) einer Laufschaufel (90) aufweist; und
Beschichten mindestens eines Bereichs des Laufschaufel-Endes mit dem Mikroplasmastrom ohne Maskieren der Laufschaufel.

20. Verfahren nach Anspruch 19, bei dem das Beschichten mindestens des Bereichs des Laufschaufel-Endes (92) aufweist:
Einspeisen einer Menge eines ersten pulverförmigen Materials (34), um eine Bindungsauftragsschicht zu bilden; und
Einspeisen einer Menge eines zweiten pulverförmigen Materials (34), um eine Deckauftragsschicht zu bilden.

21. Verfahren nach Anspruch (20), bei dem die Bindungsauftragsschicht eine Dicke von etwa 0,001 inch bis 0,005 inch (0.025 bis 0,127 mm) aufweist und die Deckauftragsschicht eine Dicke von etwa 0,004 inch bis 0,025 inch (0,1 bis 0,635 mm) aufweist.

22. Verfahren nach Anspruch 20, bei dem die Bindungsauftragsschicht ein metallisches Material aufweist und die Deckauftragsschicht ein keramisches Material aufweist.

23. Verfahren nach Anspruch 22, bei dem das keramische Material mit Yttriumoxid stabilisiertes Zirconiumdioxid oder ein Gemisch aus Aluminiumoxid und Titandioxid aufweist.

24. Verfahren nach Anspruch 22, bei dem das metallische Material ausgewählt wird aus der Gruppe, die aus Nickel, Aluminium und Kombinationen davon besteht.

25. Verfahren nach Anspruch 22, bei dem das metallische Material eine Formel "M"CrAIY und ein Gemisch aus Hafnium und Silicium aufweist, worin "M" ausgewählt wird aus der Gruppe, die aus Nickel, Cobalt und Kombinationen davon besteht.

## Revendications

1. Procédé de réparation d'une pièce de fabrication en utilisant du micro plasma, comprenant les étapes suivantes :
générer un flux de micro plasma (21) comprenant une largeur d'environ 0,5 millimètre à environ 5 millimètres ;
appliquer ledit flux de micro plasma à une pièce de fabrication (100); et
revêtir une partie de ladite pièce de fabrication (100) avec ledit flux de micro plasma sans masquer ladite pièce de fabrication.

2. Procédé selon la revendication 1, dans lequel la génération dudit flux de revêtement par pulvérisation de micro plasma comprend les étapes suivantes :
passer un gaz à arc inerte dans un arc électrique (20) généré par une anode (16) et une cathode (28) d'un appareil de revêtement par pulvérisation de micro plasma pour générer ledit flux de micro plasma (2 1) ; et
fournir une quantité de matériau en poudre (34) dans ledit flux de micro plasma (21), dans lequel ledit matériau en poudre (34) est un matériau métallique sélectionné parmi le groupe consistant en un alliage de nickel chrome, du carbure de chrome et des combinaisons de ceux-ci.

3. Procédé selon la revendication 2, dans lequel ladite pièce de fabrication (100) comprend un joint à couteau (112).

4. Procédé selon la revendication 1 ou 2, dans lequel le revêtement de ladite partie de ladite pièce de fabrication comprend :
la fourniture d'une quantité d'un premier matériau en poudre (34) afin de former une couche de revêtement de liaison ; et
la fourniture d'une quantité d'un second matériau en poudre (34) afin de former une couche de revêtement supérieure.

5. Procédé selon la revendication 4, dans lequel ledit premier matériau en poudre (34) comprend un matériau métallique et ledit second matériau en poudre (34) comprend un matériau céramique.

6. Procédé selon la revendication 5, dans lequel ledit matériau céramique comprend un mélange d'oxyde d'aluminium et de dioxyde de titane.

7. Procédé selon la revendication 5, dans lequel ledit matériau métallique est sélectionné dans le groupe consistant en nickel, aluminium et des combinaisons de ceux-ci.

8. Procédé selon la revendication 5, dans lequel ledit matériau métallique comprend une formule de « M » CrAlY où « M » est sélectionné dans le groupe consistant en nickel, cobalt et des combinaisons de ceux-ci.

9. Procédé selon la revendication 5, dans lequel ledit matériau céramique est de la zircone stabilisée à l'oxyde d'yttrium ou un mélange d'oxyde d'aluminium et de dioxyde de titane.

10. Procédé selon la revendication 5, dans lequel ledit matériau métallique comprend une formule de « M » CrAlY et un mélange de hafnium et de silicium, où « M » est sélectionné dans le groupe consistant en nickel, cobalt et des combinaisons de ceux-ci.

11. Procédé de réparation d'un joint à couteau (112) d'une pièce de fabrication (100) en utilisant du micro plasma, comprenant les étapes suivantes :
générer un flux de micro plasma (21) comprenant une largeur d'environ 0,5 millimètre à environ 5 millimètres ;
appliquer ledit flux de micro plasma (21) à un joint à couteau (112) d'une pièce de fabrication (100) ; et
revêtir au moins une partie dudit joint à couteau (112) avec ledit flux de micro plasma (21) sans masquer ladite pièce de fabrication.

12. Procédé selon la revendication 11, dans lequel la génération dudit flux de revêtement par pulvérisation de micro plasma comprend les étapes suivantes :
passer un gaz à arc inerte dans un arc électrique (20) généré par une anode (16) et une cathode (28) d'un appareil de revêtement par pulvérisation de micro plasma pour générer ledit flux de micro plasma (21) ; et
fournir une quantité de matériau en poudre (34) dans ledit flux de micro plasma (21), dans lequel ledit matériau en poudre (34) est un matériau métallique sélectionné parmi le groupe consistant en un alliage de nickel chrome, du carbure de chrome et des combinaisons de ceux-ci.

13. Procédé selon la revendication 11, dans lequel le revêtement d'au moins ladite partie dudit joint à couteau (112) comprend :
la fourniture d'une quantité d'un premier matériau en poudre (34) afin de former une couche de revêtement de liaison ; et
la fourniture d'une quantité d'un second matériau en poudre (34) afin de former une couche de revêtement supérieure.

14. Procédé selon la revendication 13, dans lequel ladite couche de revêtement de liaison comprend une épaisseur d'environ 0,002 pouce à 0,008 pouce (0,05 à 0,2 mm) et ladite couche de revêtement supérieure comprend une épaisseur d'environ 0,003 pouce à 0,015 pouce (0,08 à 0,38 mm).

15. Procédé selon la revendication 13 ou 14, dans lequel ladite couche de revêtement de liaison comprend un matériau métallique et ladite couche de revêtement supérieure comprend un matériau céramique.

16. Procédé selon la revendication 15, dans lequel ledit matériau céramique comprend un mélange d'oxyde d'aluminium et de dioxyde de titane.

17. Procédé selon la revendication 15, dans lequel ledit matériau métallique est sélectionné dans le groupe consistant en nickel, aluminium et des combinaisons de ceux-ci.

18. procédé selon la revendication 15, dans lequel ledit matériau métallique comprend une formule d'un alliage de « M » CrA1Y où « M » est sélectionné dans le groupe consistant en nickel, cobalt et des combinaisons de ceux-ci.

19. Procédé de réparation d'une pointe (92) d'une lame (90) en utilisant du micro plasma, comprenant les étapes suivantes :
générer un flux de micro plasma (21) comprenant une largeur d'environ 0,5 millimètre à environ 5 millimètres :
appliquer ledit flux de micro plasma (21) à une zone comprenant une pointe (92) d'une lame (90) ; et
revêtir au moins une partie de ladite pointe de lame avec ledit flux de micro plasma sans masquer ladite lame.

20. Procédé selon la revendication 19 dans lequel le revêtement de au moins ladite partie de ladite pointe de lame (92) comprend :
la fourniture d'une quantité d'un premier matériau en poudre (34) afin de former une couche de revêtement de liaison ; et
la fourniture d'une quantité d'un second matériau en poudre (34) afin de former une couche de revêtement supérieure.

21. Procédé selon la revendication 20, dans lequel ladite couche de revêtement de liaison comprend une épaisseur d'environ 0,001 pouce à 0,005 pouce (0,025 à 0,127 mm) et ladite couche de revêtement supérieure comprend une épaisseur d'environ 0,004 pouce à 0,025 pouce (0,1 à 0,635 mm).

22. Procédé selon la revendication 20, dans lequel ladite couche de revêtement de liaison comprend un matériau métallique et ladite couche de revêtement supérieure comprend un matériau céramique.

23. Procédé selon la revendication 22, dans lequel ledit matériau céramique comprend de la zircone stabilisée à l'oxyde d'yttrium ou un mélange d'oxyde d'aluminium et de dioxyde de titane.

24. Procédé selon la revendication 22, dans lequel ledit matériau métallique est sélectionné dans le groupe consistant en nickel, aluminium et des combinaisons de ceux-ci.

25. Procédé selon la revendication 22, dans lequel ledit matériau métallique comprend une formule de « M » CrAlY et un mélange de hafnium et de silicium, où « M » est sélectionné dans le groupe consistant en nickel, cobalt et des combinaisons de ceux-ci.
